# FASCICULE DE BREVET EUROPEEN

(11) **EP 2 927 119 B1**
(45) Date de publication et mention de la délivrance du brevet: **12.07.2017**
(21) Numéro de dépôt: 15158896.9
(22) Date de dépôt: 12.03.2015
(51) Int. Cl.: B64C 25/42, B64C 25/44, F16D 65/54, F16D 55/24, F16D 55/40, F16D 65/18, F16D 65/58, F16D 121/04

(54) **Actionneur de freinage pour frein hydraulique de roue d'aéronef**
Bremszylinder für eine hydraulische Radbremse eines flugzeuges
Brake actuator for an aircraft wheel hydraulic brake

(30) Priorité: 01.04.2014 FR 1452887
(43) Date de publication de la demande: 07.10.2015
(73) Titulaire: Safran Landing Systems, 78140 Vélizy-Villacoublay (FR)
(72) Inventeur: Gonzalez, Vincent, 78140 VELIZY-VILLACOUBLAY (FR); Bussiere, Jacques, 78140 VELIZY-VILLACOUBLAY (FR)
(74) Mandataire: Parzy, Benjamin Alain

(56) Documents cités:
- EP-A1- 0 555 819
- WO-A1-2005/019679
- GB-A- 2 017 844
- US-A- 3 903 999
- US-A- 4 503 950
- US-A- 4 815 359

## Description

L'invention concerne un actionneur de freinage pour frein hydraulique de roue d'aéronef.

### ARRIERE-PLAN TECHNOLOGIQUE DE L'INVENTION

Les freins hydrauliques utilisés pour freiner les roues des aéronefs comprennent généralement une couronne présentant des multiples cavités dans lesquelles des actionneurs de freinage sont rapportés de manière amovible. Chacun des actionneurs comprend une chemise qui est rapportée à étanchéité dans l'une des cavités de la couronne et dans laquelle un piston est monté à coulissement étanche selon un axe de coulissement.

La couronne distribue du fluide hydraulique sous pression à toutes ses cavités, fluide qui agit sur le piston pour le faire sortir et appliquer un effort de freinage sur des éléments de friction s'étendant en regard de la couronne, dont des rotors qui tournent avec la roue, et des stators qui sont immobiles en rotation.

Le piston présente en général une course opérationnelle qu'il parcourt lors de l'application d'un effort de freinage. Cette course opérationnelle, de l'ordre de quelques millimètres, est suffisante pour permettre l'application de l'effort de freinage sur les éléments de friction, et le recul du piston de façon à permettre la libre rotation des rotors. A cet effet, un ressort s'étendant à l'intérieur du piston assure le recul du piston jusqu'à une position de retrait lorsque l'effort de freinage n'est plus appliqué.

Cependant, les éléments de friction s'usant progressivement à la suite de l'application répétée d'efforts de freinage, il importe de faire en sorte que le piston se trouve toujours à proximité des éléments de friction. Pour ce faire, il est connu d'équiper les actionneurs de freinage d'un dispositif de rattrapage d'usure qui s'étend à l'intérieur du piston.

Il est ainsi connu des dispositifs de rattrapage d'usure qui comprennent une butée mobile qui est montée coulissante avec friction selon l'axe de coulissement sur une tige centrale s'étendant dans le piston et qui définit la position de retrait du piston. Lors de l'application d'un effort de freinage, le piston est poussé vers les éléments de friction et, le cas échéant, entraîne la butée mobile avec lui en vainquant la friction entre la tige et la butée, ce qui provoque l'avancement de la butée mobile sur la tige. Lorsque l'effort est relâché, le ressort fait reculer le piston jusqu'à la nouvelle position de retrait qui a avancé du fait de l'avancée de la butée mobile relativement à la tige.

La friction peut être organisée comme suit : la butée mobile comporte une douille déformable radialement qui coopère à une extrémité distale avec une olive solidaire d'une extrémité distale de la tige centrale pour être déformée par ladite olive.

Toutefois, la butée mobile a tendance à basculer autour de l'olive lors de son déplacement selon l'axe de coulissement. L'extrémité proximale de ladite butée mobile vient alors frotter contre la tige centrale ce qui peut provoquer la formation de rayures indésirables sur la tige centrale. En effet, l'extrémité proximale du piston est en partie guidée par la tige centrale du dispositif de rattrapage d'usure, un joint d'étanchéité étant porté par le piston de sorte à s'étendre entre la tige centrale et l'extrémité proximale du piston. Ainsi, lors des déplacements du piston selon l'axe de coulissement, le joint vient régulièrement frotter sur lesdites rayures ce qui finit par entraîner une détérioration du joint nuisible à l'étanchéité de l'actionneur.

Le document EP 0 555 819 A1 décrit un actionneur de freinage selon le préambule de la revendication 1.

### OBJET DE L'INVENTION

L'invention a pour objet de proposer un actionneur de freinage pour frein hydraulique de roue d'aéronef ne comportant pas l'inconvénient précité.

### PRESENTATION DE L'INVENTION

En vue de la réalisation de ce but, on propose un actionneur de freinage pour frein hydraulique de roue d'aéronef, destiné à être reçu dans l'une des cavités d'une couronne du frein, l'actionneur comprenant
- une chemise adaptée à être reçue à étanchéité dans la cavité de la couronne ;
- un piston monté à coulissement étanche dans la chemise selon un axe de coulissement pour appliquer un effort de freinage lors de l'introduction d'un fluide sous pression dans la cavité, le piston étant équipé d'une cage interne ;
- un dispositif de rattrapage d'usure qui définit, avec la cage interne, une position de retrait du piston dans la chemise au moyen d'une butée mobile axialement pouvant être avancée par la cage interne lors de l'application d'un effort de freinage et en relation de friction avec une partie fixe du dispositif de rattrapage d'usure solidaire de la chemise, la butée mobile comporte une douille déformable radialement qui coopère avec une olive, pour être déformée par ladite olive, qui est solidaire d'une extrémité distale de la partie fixe du dispositif de rattrapage d'usure; et
- un organe élastique de rappel du piston vers la position de retrait définie par appui du piston sur la cage interne, cage interne elle-même en appui sur la douille.

Selon l'invention, l'extrémité proximale de la douille est conformée de sorte à s'élargir radialement en direction de la face interne de la cage interne pour venir s'étendre à ajustement contre ladite face interne et former ainsi des moyens de guidage de l'extrémité proximale contre une face interne de la cage. Ainsi la douille est à la fois guidée au niveau de sa paroi interne en contact avec l'olive et au niveau de son extrémité proximale en contact avec la cage interne. Ceci limite le basculement de la douille autour de l'olive notamment en début de cycle lorsque la douille n'est pas encore déformée et que l'olive est en contact avec l'extrémité distale de la douille.

De la sorte, on évite la formation de rayures indésirables sur la partie fixe du dispositif de rattrapage d'usure lors du déplacement de la douille selon l'axe de coulissement.

Pour la présente demande, on entend par « extrémité proximale » l'extrémité la plus proche du fond de la cavité de la couronne associée à l'actionneur considéré et donc on entend par « extrémité distale » l'extrémité la plus proche du frein.

### BREVE DESCRIPTION DES FIGURES

L'invention sera mieux comprise à la lumière de la description qui suit en référence aux figures des dessins annexés, parmi lesquelles :
- la figure 1 est une vue en coupe d'un actionneur de freinage selon l'invention illustré en place dans une couronne d'un frein hydraulique d'aéronef ;
- la figure 2 est une figure analogue à la figure 1, l'actionneur étant illustré lors de l'application d'un effort de freinage ;
- la figure 3 est une figure analogue à la figure 2, l'actionneur étant illustré après relâchement de l'effort de freinage ;
- la figure 4 est une vue agrandie du détail A illustré à la figure 1, un espace exagéré ayant été illustré entre la cage et la douille.

### DESCRIPTION DETAILLEE DE L'INVENTION

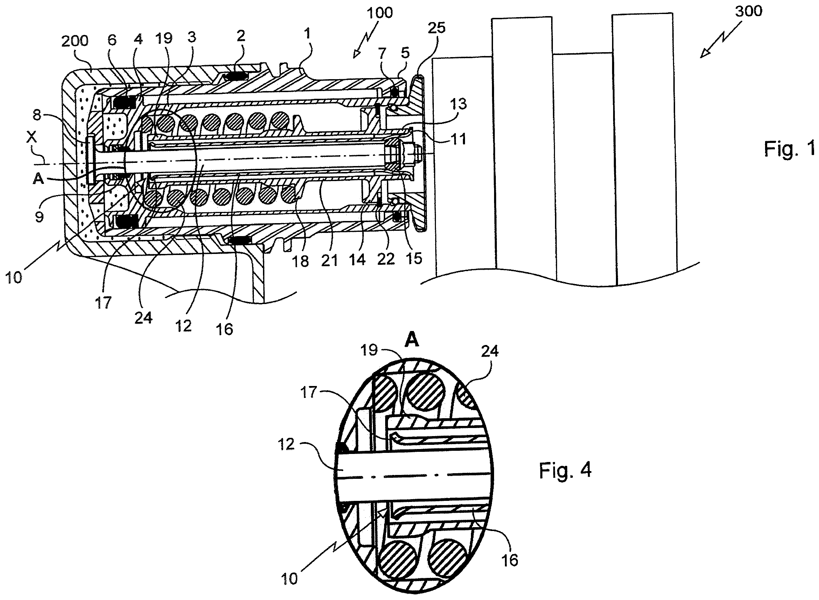

En référence à la figure 1, l'actionneur de freinage 100 de l'invention est destiné à être reçu dans l'une des cavités 200 d'une couronne d'un frein hydraulique d'aéronef, comportant par ailleurs des éléments de friction 300 comportant une succession de disques rotors et de disques stators, par exemple des disques en carbone, sur lesquels l'actionneur exerce sélectivement un effort de freinage lors de l'admission de fluide sous pression (illustré par des points) dans la cavité 200.

L'actionneur 100 comporte tout d'abord une chemise 1 généralement cylindrique qui est reçue à étanchéité dans la cavité 200 de la couronne. A cet effet, un joint d'étanchéité 2 coopère avec une face externe de la chemise pour contenir le fluide hydraulique dans la cavité 200.

Un piston 3 est monté pour coulisser dans la chemise 1 selon un axe de coulissement X. A cet effet, l'extrémité distale 5 de la chemise 1 est conformée en palier pour guider le piston 3. L'extrémité distale 5 de la chemise 1 est munie d'un racleur 7. En outre, l'extrémité proximale 4 est conformée sur sa face externe en palier qui s'étend à ajustement contre une face interne de la chemise 1. L'extrémité proximale du piston 1 est ainsi munie d'un premier joint d'étanchéité 6 agencé entre la face interne de la chemise 1 et la face externe de l'extrémité proximale 4 du piston 3.

Par ailleurs, l'extrémité distale du piston 3 porte un patin 25 destiné à venir appuyer en service sur les éléments de friction 300.

En outre, le piston 3 est équipé d'une cage interne 21 qui est arrêtée sur le piston 3 au moyen d'un segment d'arrêt 22 solidaire du piston 3. La cage interne 21 présente ainsi sur sa paroi externe un premier redan 14 apte à coopérer avec ledit segment d'arrêt 22. La cage interne présente en outre un deuxième redan 18 apte à coopérer avec un ressort 24 s'étendant entre ledit deuxième redan 18 et l'extrémité proximale 4 du piston 3.

L'actionneur 100 est également muni d'un dispositif de rattrapage d'usure 10.

Le dispositif de rattrapage d'usure 10 comprend une partie fixe solidaire de la chemise 1. La partie fixe comporte ici une tige centrale 12 dont une extrémité proximale 8 est solidarisée à la chemise 1. La tige centrale 12 est agencée de sorte que le piston 3 et la cage interne 21 s'étendent autour de la tige centrale 12. Plus précisément, l'extrémité proximale 4 du piston 3 est conformée sur sa face interne en palier qui s'étend à ajustement contre la tige centrale 12. L'extrémité proximale 4 du piston 3 comporte ainsi un deuxième joint d'étanchéité 9 agencé entre la tige centrale 12 et le piston 3. De la sorte, la tige centrale 12 permet également de guider le coulissement du piston 3 dans la chemise 1 selon l'axe de coulissement X.

Par ailleurs, l'extrémité distale de la tige centrale 12 porte une olive 15 à surface externe sphérique.

Le dispositif de rattrapage d'usure comprend en outre une butée mobile qui comprend une douille déformable 16 s'étendant autour de la tige centrale 12 entre ladite tige centrale 12 et la cage interne 21.

L'olive 15 est d'un diamètre supérieur à un diamètre interne de la douille 16, de sorte que le déplacement de l'olive 15 dans la douille 16 provoque la déformation radiale de la douille 16, ce qui génère un effort de friction suffisant pour retenir la douille en position sur l'olive 15 en l'absence de sollicitation externe. Par ailleurs, du fait de la déformation radiale de la douille 16, la partie déformée de la douille 16 vient en appui contre la face interne de la cage interne 21 ce qui génère également un effort de friction suffisant pour retenir la cage interne 21 en position sur la douille 16, et donc sur l'olive 15, en l'absence de sollicitation interne.

L'extrémité distale de la douille 16 comporte en outre une collerette 11 formant une butée contre laquelle vient s'appuyer l'extrémité distale 13 de la cage interne 21 lors de l'application d'un effort de freinage.

Selon l'invention, et comme plus visible à la figure 4, l'extrémité proximale 17 de la douille 16 est conformée de sorte à s'élargir radialement en direction de la face interne de la cage interne 21. L'extrémité proximale 17 est ainsi courbée en direction de la face interne de la cage interne 21. De la sorte, l'extrémité proximale 17 s'étend à ajustement contre la face interne de la cage interne 21 et forme ainsi des moyens de guidage de l'extrémité proximale 17 contre la face interne de la cage interne 21 (l'espace entre l'extrémité proximale 17 et la cage interne étant représenté ici de façon exagérée pour faciliter la compréhension de l'invention).

La douille 16 est ainsi guidée à son extrémité proximale par la cage interne 21 et à son extrémité distale, lorsque la douille 16 n'est pas ou peu déformée, par l'olive 15.

En situation de repos, le ressort 24 repousse le piston 3 jusqu'à la position de retrait illustrée à la figure 1, définie par l'appui du segment d'arrêt 22 contre le premier redan 14 de la cage interne 21.

Le fonctionnement de l'actionneur de freinage de l'invention est le suivant. Partant de la position de retrait illustrée à la figure 1, on applique un effort de freinage en admettant du fluide sous pression dans la cavité 200. Le fluide repousse le piston 3 vers les disques 300. Si, avant que le patin 25 ne touche les disques 300, l'extrémité proximale 4 du piston 3 vient buter contre l'extrémité proximale 19 de la cage interne 21, l'extrémité distale 13 de la cage interne 21 est avancée par le piston 3 et vient appuyer contre la collerette 11 de la douille 16 ce qui provoque un déplacement simultané de la cage interne 21 et de la douille 16 selon l'axe de coulissement X.

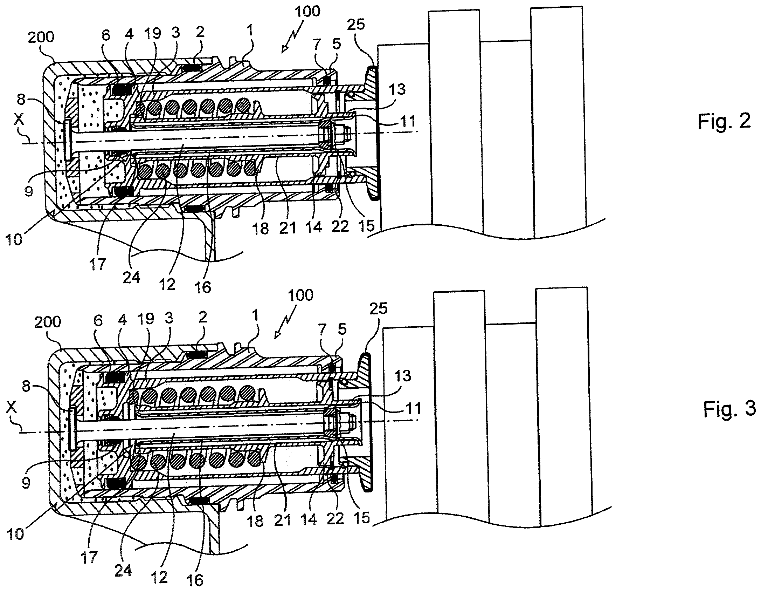

La douille 16 est ainsi avancée, par l'intermédiaire de la cage interne 21, par le piston 3 à l'encontre de la friction générée par la déformation radiale qu'impose l'olive 15 à la douille 16, jusqu'à contact du patin 25 avec les disques 300, comme illustré à la figure 2.

Puis, quand l'effort de freinage est relâché, le piston 3 revient sous l'effet du ressort 24, jusqu'à ce que le segment d'arrêt 22 vienne en butée contre le premier redan 14 de la cage interne 21, définissant ainsi une nouvelle position de retrait, avancée par rapport à la précédente, comme illustré à la figure 3. La course opérationnelle du piston (entre la position de la figure 2 et la position de la figure 3) est inchangée, seule la position de retrait ayant légèrement avancé pour compenser l'usure des disques 300.

L'invention n'est pas limitée à ce qui vient d'être décrit, mais englobe au contraire toute variante entrant dans le cadre défini par les revendications.

## Revendications

1. Actionneur de freinage pour frein hydraulique de roue d'aéronef, destiné à être reçu dans l'une des cavités (200) d'une couronne du frein, l'actionneur comprenant
- une chemise (1) adaptée à être reçue à étanchéité dans la cavité de la couronne ;
- un piston (3) monté à coulissement étanche dans la chemise selon un axe de coulissement (X) pour appliquer un effort de freinage lors de l'introduction d'un fluide sous pression dans la cavité, le piston étant équipé d'une cage interne (21) ;
- un dispositif de rattrapage d'usure (10) qui définit, avec la cage interne, une position de retrait du piston dans la chemise au moyen d'une butée mobile axialement pouvant être avancée par la cage interne lors de l'application d'un effort de freinage et en relation de friction avec une partie fixe (12) du dispositif de rattrapage d'usure solidaire de la chemise, la butée mobile comporte une douille (16) déformable radialement qui coopère avec une olive (15), pour être déformée par ladite olive, qui est solidaire d'une extrémité distale de la partie fixe du dispositif de rattrapage d'usure; et
- un organe élastique de rappel (24) du piston vers la position de retrait définie par appui du piston sur la cage interne, cage interne elle-même en appui sur la douille ;
**caractérisé en ce que** l'extrémité proximale (17) de la douille (16) est conformée de sorte à s'élargir radialement en direction de la face interne de la cage interne (21) pour venir s'étendre à ajustement contre ladite face interne et former ainsi des moyens de guidage de l'extrémité proximale contre une face interne de la cage.

2. Frein hydraulique pour roue d'aéronef, comportant au moins un actionneur de freinage selon la revendication 1.

## Patentansprüche

1. Bremsaktor für eine Hydraulikbremse eines Luftfahrzeugrades, der dazu bestimmt ist, in einem der Hohlräume (200) eines Kranzes der Bremse aufgenommen zu werden, wobei der Aktor umfasst
- eine Buchse (1), die dazu geeignet ist, mit Dichtheit in dem Hohlraum des Kranzes aufgenommen zu werden;
- einen Kolben (3), der in der Buchse entlang einer Verschiebungsachse (X) auf dichte Weise verschiebbar gelagert ist, um während des Einbringens von Druckfluid in den Hohlraum eine Bremskraft auszuüben, wobei der Kolben mit einem Innengehäuse (21) ausgestattet ist;
- eine Verschleißnachstellvorrichtung (10), die mit dem Innengehäuse eine Rückzugsposition des Kolbens in der Buchse mittels eines axial beweglichen Anschlags definiert, der von dem Innengehäuse während der Ausübens der Bremskraft vorgeschoben werden kann und der in Reibbeziehung mit einem ortsfesten Teil (12) der Verschleißnachstellvorrichtung steht, der fest mit der Buchse verbunden ist, wobei der bewegliche Anschlag eine radial verformbare Hülse (16) umfasst, die mit einer Olive (15) zusammenwirkt, um von der genannten Olive verformt zu werden, die fest mit einem distalen Ende des ortsfesten Teils der Verschleißnachstellvorrichtung verbunden ist; und
- ein elastisches Rückstellorgan (24) zum Rückstellen des Kolbens in die Rückzugsposition, die durch die Anlage des Kolbens an dem Innengehäuse definiert ist, wobei das Innengehäuse selbst an der Hülse anliegt, **dadurch gekennzeichnet, dass** das proximale Ende (17) der Hülse (16) derart geformt ist, dass es sich radial in Richtung der inneren Fläche des Innengehäuses (21) aufweitet, um sich mit Passsitz an der genannten inneren Fläche zu erstrecken und so Führungsmittel zum Führen des proximalen Endes an einer inneren Fläche des Gehäuses zu bilden.

2. Hydraulische Bremse für ein Luftfahrzeugrad, umfassend mindestens einen Bremsaktor nach Anspruch 1.

## Claims

1. Brake actuator for an aircraft wheel hydraulic brake, designed to be received in one of the cavities (200) of a ring of the brake, the actuator comprising
- a sleeve (1) capable of being sealingly received in the cavity of the ring;
- a piston (3) sealingly slidably mounted in the sleeve along a sliding axis (X) to apply a braking force when a pressurized fluid is introduced into the cavity, the piston being provided with an internal cage (21);
- a wear compensating device (10) which defines, with the internal cage, a retracted position of the piston in the sleeve by means of an axially mobile stop which is able to be moved forward by the internal cage during the application of a braking force and/in frictional relationship with a fixed part (12) of the wear compensating device attached to the sleeve, the mobile stop comprising a radially deformable bushing (16) which cooperates with an olive (15) so as to be deformed by said olive which is attached to a distal end of the fixed part of the wear compensating device; and
- a resilient member (24) for returning the piston to the retracted position defined by the bearing of the piston against the internal cage, the internal cage in turn bearing against the bushing;
**characterized in that** the proximal end (17) of the bushing (16) is shaped so as to be widened radially in the direction of the internal face of the internal cage (21) in order to extend so as to fit against said internal face and thus to form means for guiding its proximal end (17) against an internal face of the internal cage (21).

2. Hydraulic brake for an aircraft wheel comprising at least one brake actuator according to claim 1.
